# FASCICULE DE BREVET EUROPEEN

(11) **EP 1 115 587 B1**
(45) Date de publication et mention de la délivrance du brevet: **19.03.2003**
(21) Numéro de dépôt: 99953746.7
(22) Date de dépôt: 01.10.1999
(51) Int. Cl.: B60C 9/18, B60C 9/20, B60C 9/22

(54) **ARMATURE DE SOMMET POUR PNEUMATIQUE RADIAL**
VERSTÄRKUNGSGÜRTEL FÜR RADIALEN REIFEN
RADIAL TYRE BREAKER REINFORCEMENT

(30) Priorité: 02.10.1998 FR 9812594
(43) Date de publication de la demande: 18.07.2001
(73) Titulaire: Société de Technologie Michelin, 63040 Clermont-Ferrand Cedex 09 (FR); MICHELIN RECHERCHE ET TECHNIQUE S.A., CH-1763 Granges-Paccot (CH)
(72) Inventeur: COSTA PEREIRA, Pedro, F-63000 Clermont-Ferrand (FR); HERBELLEAU, Yves, F-63200 Riom (FR)
(74) Mandataire: Dequire, Philippe Jean-Marie Denis
(86) Numéro de dépôt international: EP9907263
(87) Numéro de publication internationale: WO00020233

(56) Documents cités:
- EP-A- 0 066 225
- EP-A- 0 401 444
- EP-A- 0 760 296
- FR-A- 2 499 912
- US-A- 3 392 774
- PATENT ABSTRACTS OF JAPAN vol. 009, no. 132 (M-385), 7 juin 1985 (1985-06-07) & JP 60 015203 A (BRIDGESTONE KK), 25 janvier 1985 (1985-01-25)
- PATENT ABSTRACTS OF JAPAN vol. 018, no. 133 (M-1571), 4 mars 1994 (1994-03-04) & JP 05 319016 A (BRIDGESTONE CORP), 3 décembre 1993 (1993-12-03)
- PATENT ABSTRACTS OF JAPAN vol. 1995, no. 10, 30 novembre 1995 (1995-11-30) & JP 07 186614 A (BRIDGESTONE CORP), 25 juillet 1995 (1995-07-25)

## Description

L'invention concerne les sommets des pneumatiques et notamment les gommes de découplage des nappes de renforcement de ces sommets.

Les sommets des pneumatiques comprennent usuellement une armature de carcasse, une armature de ceinture avec usuellement au moins deux nappes de renforcement superposées formées de fils parallèles dans chaque nappe et croisés d'une nappe à l'autre et une bande de roulement.

Le document FR 2 499 912 décrit un tel pneumatique dans lequel, entre deux nappes de renforcement sont disposées axialement de façon adjacente deux couches de gommes de propriétés mécaniques différentes.

Les sommets des pneumatiques sont en contact avec le sol et doivent notamment transmettre aux roues par l'intermédiaire des flancs et des bourrelets les efforts transversaux nécessaires pour guider les véhicules. Pour que le comportement routier des véhicules soit satisfaisant, il faut que les sommets aient une grande rigidité relativement par exemple aux flancs. C'est un objectif permanent d'essayer d'obtenir une telle rigidité élevée de façon simple et la plus économique possible.

Il est bien connu que les gommes de découplage des fils du renforcement de ceinture participent à l'obtention d'une rigidité élevée. C'est pourquoi, ces gommes de découplage ont usuellement un haut module d'élasticité. En revanche, les gommes de découplage en contact avec les fils des armatures de carcasse ont usuellement un bas module d'élasticité parce qu'elles doivent supporter sans dommage les déformations élevées qu'elles subissent dans les flancs des pneumatiques.

D'autre part, de très nombreuses recherches sont actuellement menées pour diminuer la consommation d'essence des véhicules routiers. Dans ce but, on cherche à concevoir des pneumatiques ayant une résistance au roulement très basse tout en conservant les mêmes autres propriétés d'usure, d'adhérence, de comportement, etc. et de la façon la plus économique possible.

L'invention a pour objet un pneumatique dont la structure de sommet est perfectionnée pour faciliter son procédé de fabrication et ainsi le rendre plus économique, ainsi que pour améliorer sa qualité et ses performances.

L'invention a aussi pour objet, suivant une première variante, un mode de réalisation du destiné principalement à abaisser la résistance au roulement et, suivant une seconde variante, un mode de réalisation destiné principalement à améliorer la rigidité du sommet.

Dans ce qui suit, on entend par « fil », aussi bien des monofilaments que des multifilaments, ou des assemblages comme des câbles, des retors ou bien encore n'importe quel type d'assemblage équivalent, et ceci, quels que soient la matière et le traitement de ces fils, par exemple traitement de surface ou enrobage, notamment de caoutchouc ayant subi un début de vulcanisation, ou préencollage pour favoriser l'adhésion sur le caoutchouc.

On entend par « couche de gomme de découplage » entre deux nappes de renforcement adjacentes un mélange caoutchoutique en contact avec les fils de renforcement d'au moins l'une des deux nappes, adhérant à ceux-ci et remplissant les interstices entre fils adjacents. Dans la pratique industrielle courante, on réalise les nappes de renforcement par application de nappes calandrées, en conséquence, entre deux nappes de renforcement données, on utilise deux couches de gommes de découplage, chacune étant en contact avec les fils de l'une des deux nappes et ayant la même composition pour les différentes zones du pneumatique.

On entend par « contact » entre un fil et une couche de gomme de découplage, le fait que, au moins une partie de la circonférence extérieure du fil est en contact intime avec le mélange caoutchoutique constituant de la gomme de découplage. Si le fil comporte un revêtement ou un enrobage, le terme contact veut dire que c'est la circonférence extérieure de ce revêtement ou de cet enrobage qui est en contact intime avec le mélange caoutchoutique constituant la gomme de liaison.

Par « module d'élasticité » d'un mélange caoutchoutique, on entend un module d'extension sécant obtenu à une déformation d'extension uniaxiale de l'ordre de 10 % après trois cycles d'accommodation et à température ambiante.

Lors d'une sollicitation sinusoïdale d'un mélange caoutchoutique, par exemple à déformation imposée, ε* = ε₀ e^{jωt}, la réponse en régime permanent de ce mélange est elle aussi sinusoïdale et déphasée d'un angle δ, σ* = σ₀ e^{j (ωt+δ)}. On définit un module complexe G* = σ*/ε* = σ₀/ε₀ e^{jδ} = G' + jG", avec σ la contrainte en MPa. On appelle « module dynamique » G' et « module dynamique de perte » G". Le rapport tg δ = G"/G' est appelé facteur d'amortissement. Les mesures sont réalisées en sollicitation de cisaillement alterné à une fréquence de 10 Hz, à une température de 60°C et à une déformation dynamique crête à crête de 10 %.

Le pneumatique selon l'invention comprend un sommet, deux flancs et deux bourrelets, une armature de carcasse ancrée dans les deux bourrelets et une armature de ceinture, cette armature de ceinture comprenant au moins deux nappes de renforcement superposées formées de fils parallèles dans chaque nappe et croisés d'une nappe à l'autre en faisant avec la direction circonférentielle des angles (α, β) compris entre 10° et 70°. Ce pneumatique est caractérisé en ce que, entre les deux nappes de renforcement superposées, se trouvent, disposées axialement de façon adjacente, au moins deux couches de gommes de découplage de propriétés mécaniques différentes, et en ce que chacune desdites deux couches de gomme de découplage est en contact avec les fils desdites deux nappes de renforcement superposées.

Ce pneumatique a l'avantage de n'avoir en toute section circonférentielle (en dehors des zones de transition entre les deux couches de gommes de découplage adjacentes) qu'une couche de gomme de découplage unique entre les deux nappes de renforcement de sommet. Cette couche peut avoir des propriétés différentes dans des sections circonférentielles différentes, par exemple au centre et sur les bords des nappes. Cela permet d'adapter la nature et les propriétés de cette couche unique en fonction de l'objectif du concepteur du pneumatique.

De préférence, les couches de gomme de découplage sont réalisées par un enroulement hélicoïdal d'un profilé de mélange caoutchoutique directement sur les fils de la nappe de renforcement radialement intérieure. Cette application directe des couches de gommes de découplage sur les fils des nappes de renforcement simplifie la fabrication du pneumatique.

Une première couche de découplage est disposée, entre la partie centrale des deux nappes de renforcement superposées, et une seconde couche de découplage est disposée d'un côté au moins de la première couche et s'étend, au moins, jusqu'aux extrémités latérales correspondantes des deux nappes de renforcement superposées.

Dans un premier mode de réalisation, le rapport entre les modules d'élasticité de la seconde couche et de la première couche est compris entre 0,05 et 0,8 et préférentiellement entre 0,4 et 0,6.

Dans ce mode de réalisation, le module d'élasticité des gommes de découplage entre les deux nappes de renforcement constituées de fils croisés est nettement inférieur dans au moins une zone latérale du sommet du pneumatique à celui des gommes de découplage dans la zone centrale du sommet. Ceci a l'avantage de permettre des gains substantiels en résistance à l'avancement en maintenant les propriétés de poussée de dérive et de durée de vie en roulage à des niveaux tout à fait acceptables.

De préférence, la seconde couche de gomme de découplage a une valeur de facteur d'amortissement tg δ inférieure à 0,08. Une telle couche est très faiblement hystérétique et contribue fortement au gain de résistance à l'avancement du pneumatique concerné.

Il est aussi possible, pour conserver ou améliorer les propriétés de poussée de dérive et de durée de vie d'ajouter, du même côté que la seconde couche de gomme de découplage, une nappe de renforcement additionnelle constituée de fils orientés dans la direction circonférentielle et s'étendant axialement sensiblement comme la seconde couche de gomme de découplage. Cette nappe de renforcement additionnelle peut être disposée radialement extérieurement ou intérieurement relativement aux deux nappes de renforcement superposées ou entre ces deux nappes.

Ce premier mode de réalisation d'un pneumatique est plus particulièrement adapté pour des pneumatiques de rapport d'aspect H/B supérieur à 0,55.

Selon un second mode de réalisation, le rapport entre les modules d'élasticité de la seconde couche et de la première couche de gomme de découplage est compris entre 1,2 et 20 et de préférence entre 1,5 et 10.

Dans ce second mode de réalisation, c'est la première couche de gomme de découplage disposée dans la zone centrale des deux nappes de renforcement qui a un module d'élasticité bas inférieur à celui de la couche de gomme de découplage disposée dans les zones latérales du sommet du pneumatique.

Ce second mode de réalisation présente aussi l'avantage de permettre de diminuer la résistance à l'avancement sans pénaliser les propriétés de poussée de dérive et de durée de vie. Ce second mode de réalisation est plus particulièrement intéressant avec des pneumatiques de rapport d'aspect inférieur à 0,55.

Selon un autre mode de réalisation de l'invention, les deux nappes de renforcement entre lesquelles sont disposées axialement deux couches de gommes de découplage de propriétés mécaniques différentes sont une nappe de renforcement de sommet et une nappe de renforcement de carcasse. Ce mode de réalisation est plus particulièrement avantageux lorsque l'armature de ceinture est constituée d'une nappe de renforcement dont les fils sont orientés relativement à la direction circonférentielle selon un angle α compris entre 10° et 70° et d'une nappe de renforcement formée de fils parallèles orientés sensiblement circonférentiellement.

L'invention est maintenant décrite au moyen du dessin annexé dans lequel :
- la figure 1 présente en coupe méridienne partielle un sommet de pneumatique selon l'invention ;
- la figure 2 présente en coupe méridienne partielle une variante de réalisation du sommet de pneumatique de la figure 1 ;
- la figure 3 présente en coupe méridienne partielle une variante de réalisation du sommet de pneumatique de la figure 2 ;
- la figure 4 présente en coupe méridienne partielle une seconde variante de réalisation du sommet de pneumatique de la figure 2 ;
- la figure 5 présente en coupe méridienne partielle une seconde variante de réalisation d'un sommet de pneumatique ;
- la figure 6 présente en coupe méridienne partielle une variante de réalisation du sommet de pneumatique de la figure 5.

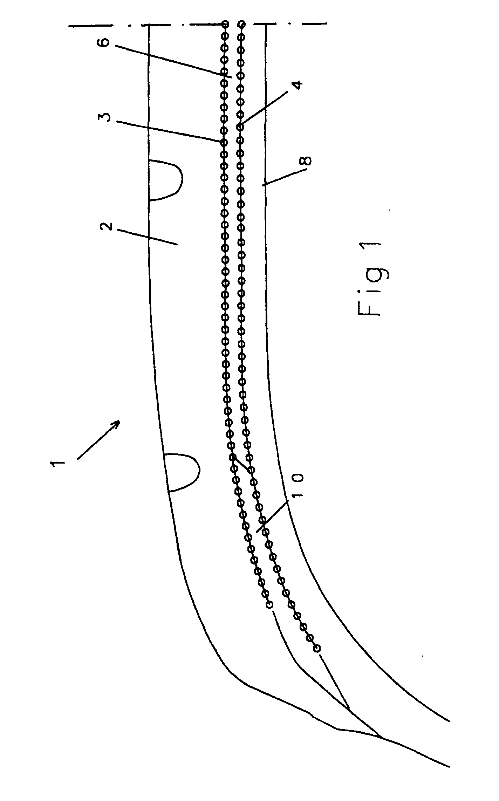

A la figure 1 est présenté, en coupe méridienne partielle et de façon schématique, un premier mode de réalisation d'un sommet de pneumatique selon l'invention. Ce sommet 1 comprend notamment une bande de roulement 2 et deux nappes de renforcement de sommet 3 et 4. Ces deux nappes sont dites croisées, elles sont superposées et constituées de fils parallèles dans chaque nappe et croisés d'une nappe à l'autre en faisant avec la direction circonférentielle des angles (α, β) compris entre 10 et 70°. Entre les deux nappes 3 et 4, on trouvent deux couches de gommes de découplage, la couche 6 dans la partie centrale des nappes et la couche 10 dans la partie latérale des nappes. Les deux couches de gomme de découplage 6 et 10 sont toutes les deux en contact avec les fils des deux nappes 3 et 4. La limite de séparation entre les deux couches 6 et 10 est de préférence inclinée en biseau.

Radialement en dessous de la nappe 4, dans la zone référencée 8, le sommet 1 comporte notamment une armature de carcasse radiale non représentée.

Les fils des nappes 3 et 4 sont disposés de telle façon qu'ils ne présentent pas de contact entre eux.

La première couche de gomme de découplage 6 a usuellement un module d'élasticité compris entre 10 et 15 MPa.

Dans la partie latérale du sommet, les fils des deux nappes 3 et 4 sont en contact avec une seconde couche de gomme de découplage 10, de module d'élasticité inférieur à celui de la première couche. Le rapport des modules est compris entre 0,05 et 0,8 et de préférence, entre 0,5 et 0,7. Cette couche de plus faible module limite l'amplitude des contraintes maximales de cisaillement aux extrémités des nappes et limite donc les énergies dissipées par hystérésis lors du roulage.

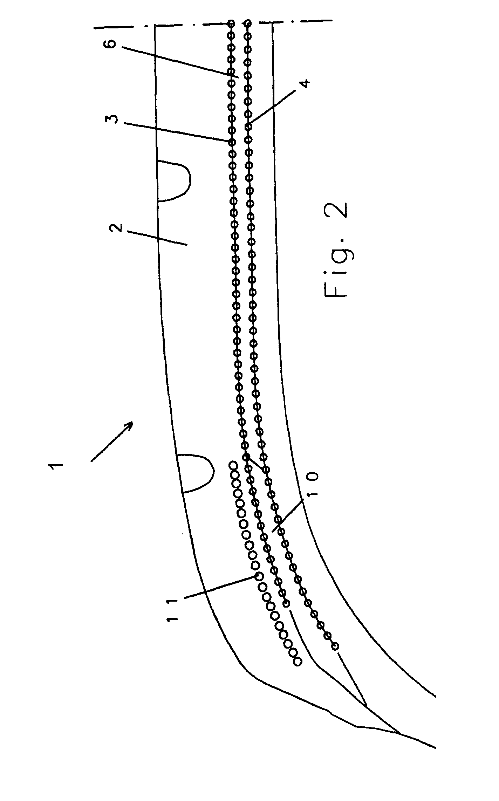

La figure 2 présente une variante de réalisation du sommet de pneumatique de la figure 1 dans lequel on a ajouté une nappe partielle 11. Cette nappe 11 est constituée de fils orientés dans la direction circonférentielle du pneumatique. Ces fils peuvent être en matériau textile, aramide, polyester, Nylon ou hybride, fibre de verre ou métal.

La nappe 11 est disposée radialement extérieurement relativement aux deux nappes 3 et 4 et s'étend axialement seulement sensiblement au-dessus des deux extrémités latérales des nappes 3 et 4. Cette nappe a l'avantage de limiter l'amplitude des sollicitations de cisaillement entre les extrémités des deux nappes 3 et 4 et ainsi de conserver voire d'augmenter les propriétés de poussée de dérive et de durée de vie (au sens endurance) tout en ayant substantiellement amélioré la résistance à l'avancement du pneumatique.

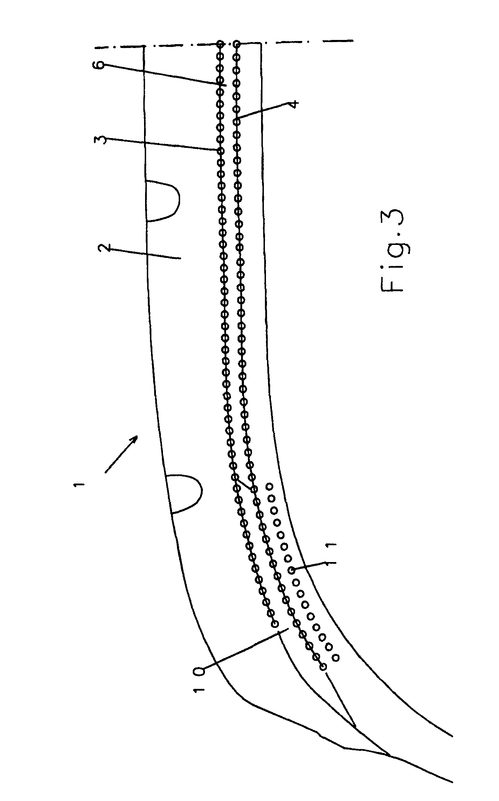

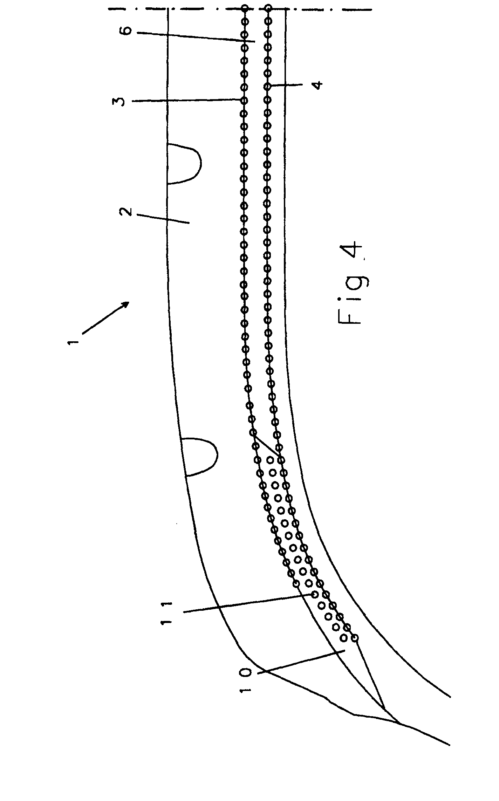

Cette nappe 11 peut aussi être disposée radialement intérieurement relativement aux deux nappes 3 et 4 (figure 4) ainsi que radialement entre les deux nappes 3 et 4 (figure 3).

Ce mode de réalisation avec une couche de gomme de découplage de module inférieur et de basse hystérésis entre les deux nappes de renforcement croisées et dans l'une au moins des extrémités latérales du sommet est particulièrement adaptée aux pneumatiques de rapport d'aspect (hauteur divisée par la largeur) H/B supérieur à 0,55.

Selon un autre mode de réalisation de l'invention, on peut aussi obtenir un gain substantiel en poussée de dérive des pneumatiques en inversant le rapport des modules d'élasticité entre les première et seconde couches. La couche de plus haut module d'élasticité est ainsi disposée aux extrémités latérales du sommet et celle de plus bas module, et de plus basse hystérésis est disposée dans la partie centrale entre les deux nappes de renforcement croisées 3 et 4.

Les couches de gomme de découplage disposées vers les extrémités latérales du sommet ont une longueur de contact avec les fils de la nappe de renforcement croisée de largeur axiale la plus faible, la nappe 3, qui doit être axialement supérieure à 5 mm et, de préférence, supérieure à 20 mm pour être efficace. Mais, il n'est pas nécessaire d'augmenter cette longueur de contact au-delà de 1/3 de la largeur axiale de la nappe 3.

Ce second mode de réalisation est plus particulièrement adapté aux pneumatiques de rapport d'aspect inférieur à 0,55.

Des pneumatiques 175/70 - 13 ont été réalisés avec les configurations suivantes :
- le témoin A comprenait un sommet métal (en câbles 6.23 NF à 80f/dm orientés à 23°) avec une couche unique de gomme de découplage entre les deux nappes 3 et 4, de module d'élasticité 12 MPa ;
- le pneumatique B avec deux couches de gommes de découplage entre les deux nappes de renforcement croisées, la couche 6 de module d'élasticité 12 MPa et la couche 10 de module d'élasticité 5 MPa ;
- le pneumatique C, second témoin, similaire au pneumatique A, mais avec une couche unique de gomme de découplage entre les deux nappes 3 et 4, de module d'élasticité 5 MPa ;
- le pneumatique D similaire au pneumatique B, mais avec en plus une nappe 11 de fils Nylon 140*2 orientés circonférentiellement au-dessus des extrémités latérales des deux nappes de renforcement croisées.

Les pneumatiques ont subi un test de résistance au roulement (à 60 km/h, pression 2,1 bars et charge 3500 N). Ce test mesure l'énergie dissipée lors du roulage et un résultat favorable s'exprime par un chiffre inférieur à 100. Ils ont aussi subi une caractérisation de leur poussée de dérive, c'est-à-dire de l'effort latéral Y développé par le pneumatique lors d'un roulage à angle de dérive δ imposé. Une augmentation de poussée de dérive s'exprime par un chiffre supérieur à 100. Le test a été réalisé avec une charge de 3500 N et une pression de gonflage de 2 bars.

| Pneumatique | RR | Y(δ) |
|---|---|---|
| A | 100 | 100 |
| B | 95 | 95 |
| C | 94 | 80 |
| D | 95 | 105 |

La solution B, selon l'invention, a montré une nette amélioration en résistance au roulement avec une diminution limitée de la poussée de dérive.

La solution C présente la même amélioration en résistance au roulement mais avec une diminution beaucoup plus nette de la poussée de dérive.

Enfin, la solution D, selon l'invention, présente une amélioration des propriétés du pneumatique dans les deux tests subis.

Ces essais montrent l'intérêt de pouvoir ajuster la rigidité et l'hystérésis des couches de gommes de découplage entre les deux nappes de renforcement de sommet croisées en fonction de la section circonférentielle du pneumatique selon l'objectif du concepteur du pneumatique.

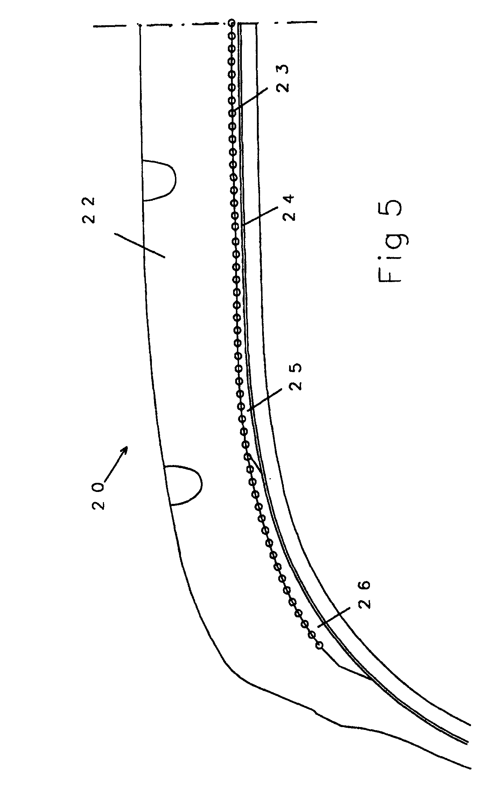

La figure 5 présente un autre mode de réalisation de l'invention. Le sommet 20 de ce pneumatique comprend une bande de roulement 22, une nappe de renforcement de sommet 23 dont les fils font avec la direction circonférentielle des angles α compris entre 10 et 70 degrés, et une nappe de renforcement de carcasse 24. Entre les deux nappes de renforcement superposées, se trouvent une première 25 et une seconde 26 couches de gommes de découplage, disposées de façon adjacente. Ces couches sont directement en contact avec les fils des deux nappes de renforcement 23 et 24. La couche 25 est disposée au centre des deux nappes, la couche 26 dans une zone latérale. Un tel pneumatique comporte aussi dans son renforcement de sommet une nappe complémentaire comportant des fils, métalliques ou non, orientés circonférentiellement (non représentée à la figure 5).

Le module d'élasticité, et/ou le facteur d'amortissement tg δ des deux couches 25 et 26 peuvent varier comme dans les deux variantes de réalisation précédemment décrites.

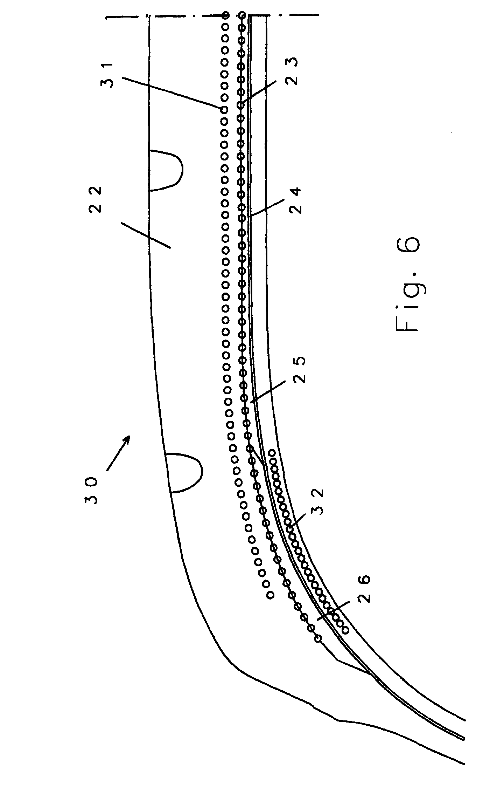

A la figure 6 est présenté une variante 30 de réalisation du sommet de pneumatique de la figure 5. Dans cette figure est représentée la nappe complémentaire de renforcement de sommet 31 comportant des fils, métalliques ou non, orientés circonférentiellement. Le sommet 30 comprend en plus une nappe partielle 32 disposée radialement intérieurement relativement aux deux nappes carcasse 24 et de renforcement de sommet 23. Cette nappe 32 améliore sensiblement les propriétés de poussée de dérive, de résistance à l'avancement et de durée de vie du pneumatique lorsque la couche de gomme de découplage de module inférieur et de basse hystérésis est disposée aux extrémités latérales du sommet.

Dans l'autre mode de réalisation qui consiste à disposer latéralement la couche de gomme de découplage de module le plus élevé, la nappe partielle 31 renforce encore le gain en poussée de dérive du pneumatique. Cela s'applique aux pneumatiques destinés à rouler à très haute vitesse.

Pour réaliser les différents pneumatiques selon l'invention, il est très avantageux de les confectionner sur un noyau rigide imposant la forme de sa cavité intérieure. On applique sur ce noyau, dans l'ordre requis par l'architecture finale, tous les constituants du pneumatique, qui sont disposés directement à leur place finale, sans subir de conformation à aucun moment de la confection. Cette confection peut notamment utiliser les dispositifs décrits dans le brevet EP 0 243 851 pour la pose des fils du renfort de carcasse, EP 0 248 301 pour la pose des renforts de sommet et EP 0 264 600 pour la pose des gommes caoutchoutiques. Les couches de gommes de découplage sont ainsi, de préférence, réalisées par un enroulement hélicoïdal d'un profilé de mélange caoutchoutique directement sur les fils de la nappe de renforcement radialement intérieure. Le pneumatique peut être moulé et vulcanisé comme exposé dans le brevet US 4 895 692.

## Revendications

1. Pneumatique comprenant un sommet (1), deux flancs et deux bourrelets, une armature de carcasse ancrée dans les deux bourrelets et une armature de ceinture, ladite armature de ceinture comprenant au moins deux nappes de renforcement superposées (3, 4) formées de fils parallèles dans chaque nappe et croisés d'une nappe à l'autre en faisant avec la direction circonférentielle des angles (α, β) compris entre 10° et 70°, **caractérisé en ce que**, entre lesdites deux nappes de renforcement superposées (3, 4), se trouvent, disposées axialement de façon adjacente, au moins deux couches de gommes de découplage (6, 10) de propriétés mécaniques différentes, et **en ce que** chacune desdites deux couches de gomme de découplage (6, 10) est en contact avec les fils desdites deux nappes de renforcement superposées (3, 4).

2. Pneumatique comprenant un sommet (20, 30), deux flancs et deux bourrelets, une armature de carcasse ancrée dans les deux bourrelets et une armature de ceinture, ladite armature de carcasse comprenant au moins une nappe de renforcement (24) formée de fils parallèles faisant avec la direction circonférentielle un angle sensiblement égal à 90°, ladite armature de ceinture comprenant au moins une nappe de renforcement (23) formée de fils parallèles faisant avec la direction circonférentielle des angles α compris entre 10° et 70°, **caractérisé en ce que**, entre ladite nappe de renforcement de sommet (23) et ladite nappe de renforcement de carcasse (24), se trouvent, disposées axialement de façon adjacente, au moins deux couches de gommes de découplage (25, 26) de propriétés mécaniques différentes, et **en ce que** chacune desdites deux couches de gomme de découplage (25, 26) est en contact avec les fils desdites deux nappes de renforcement superposées (23, 24).

3. Pneumatique selon la revendication 2, dans lequel l'armature de ceinture est constituée d'une nappe de renforcement (23) formée de fils parallèles faisant avec la direction circonférentielle un angle α compris entre 10° et 70° et d'une nappe de renforcement (31) formée de fils parallèles orientés sensiblement circonférentiellement.

4. Pneumatique selon l'une des revendications 1 à 3, dans lequel chaque couche de gomme de découplage (6, 10, 25, 26) est réalisée par un enroulement hélicoïdal d'un profilé de mélange caoutchoutique directement sur les fils de la nappe de renforcement radialement intérieure.

5. Pneumatique selon l'une des revendications 1 à 4, dans lequel une première couche de découplage (6, 25) est disposée, entre la partie centrale desdites deux nappes de renforcement superposées, et dans lequel, une seconde couche de découplage (10, 26) est disposée d'un côté au moins de la première couche et s'étend, au moins, jusqu'aux extrémités latérales correspondantes desdites deux nappes de renforcement superposées.

6. Pneumatique selon la revendication 5, dans lequel le rapport entre les modules d'élasticité de la seconde couche (10, 26) et de la première couche (6, 25) de gommes de découplage est compris entre 0,05 et 0, 8.

7. Pneumatique selon la revendication 5, dans lequel le rapport entre les modules d'élasticité de la seconde couche (10, 26) et de la première couche (6, 25) de gommes de découplage est compris entre 0,5 et 0,7.

8. Pneumatique selon l'une des revendications 5 à 7, dans lequel la seconde couche (10, 26) de gomme de découplage a une valeur de facteur d'amortissement tg 8 inférieure à celle de la première couche.

9. Pneumatique selon la revendication 8, dans lequel la seconde couche (10, 26) de gomme de découplage a une valeur de facteur d'amortissement tg δ inférieure à 0,08.

10. Pneumatique selon l'une des revendications 5 à 9, dans lequel l'armature de ceinture comprend, du même côté que ladite seconde couche de gomme de découplage, une nappe de renforcement additionnelle (11, 32) constituée de fils orientés dans la direction circonférentielle et s'étendant axialement sensiblement comme ladite seconde couche (10, 26) de gomme de découplage.

11. Pneumatique selon la revendication 10, dans lequel ladite nappe de renforcement additionnelle (11) est disposée radialement extérieurement relativement aux deux nappes de renforcement superposées.

12. Pneumatique selon la revendication 10, dans lequel ladite nappe de renforcement additionnelle (11) est disposée radialement intérieurement relativement aux deux nappes de renforcement superposées.

13. Pneumatique selon la revendication 10, dans lequel ladite nappe de renforcement additionnelle (11) est disposée radialement entre lesdites deux nappes de renforcement superposées.

14. Pneumatique selon l'une des revendications 5 à 13, dans lequel le rapport d'aspect H/B est supérieur à 0,55.

15. Pneumatique selon la revendication 5, dans lequel le rapport entre les modules d'élasticité de la seconde couche (10, 26) et de la première couche (6, 25) de gommes de découplage est compris entre 1,2 et 20.

16. Pneumatique selon la revendication 5, dans lequel le rapport entre les modules d'élasticité de la seconde couche (10, 26) et de la première couche (6, 25) de gommes de découplage est compris entre 1,5 et 10.

17. Pneumatique selon l'une des revendications 15 et 16, dans lequel la première couche de gomme de découplage (6, 25) a une valeur de facteur d'amortissement tg δ inférieure à celle de la seconde couche.

18. Pneumatique selon la revendication 17, dans lequel la première couche de gomme (6, 25) de découplage a une valeur de facteur d'amortissement tg δ inférieure à 0,08.

19. Pneumatique selon l'une des revendications 15 à 18, dans lequel le rapport d'aspect H/B est inférieur à 0,55.

20. Pneumatique selon l'une des revendications 5 à 19, dans lequel la zone de contact entre les fils de la nappe de renforcement de sommet dont la largeur axiale est la plus petite et la seconde couche (10, 26) de gomme de découplage est axialement supérieure à 5 mm.

21. Pneumatique selon l'une des revendications 5 à 20, dans lequel la zone de contact entre les fils de la nappe de renforcement de sommet dont la largeur axiale est la plus petite et la seconde couche de gomme de découplage (10, 26) est axialement comprise entre 20 mm et 1/3 de la largeur axiale de ladite nappe de renforcement de sommet

22. Pneumatique selon l'une des revendications 5 à 21, dans lequel lesdites secondes couches (10, 26) s'étendent axialement de plus de 3 mm au-delà des extrémités latérales des fils desdites nappes de renforcement de sommet.

## Claims

1. A tyre comprising a crown (1), two sidewalls and two beads, a carcass reinforcement anchored in the two beads and a belt reinforcement, said belt reinforcement comprising at least two superposed reinforcement plies (3, 4) formed of cords which are parallel within each ply and are crossed from one ply to the other, forming with the circumferential direction angles (α, β) of between 10° and 70°, **characterised in that**, between said two superposed reinforcement plies (3, 4), there are, arranged axially adjacently, at least two layers of decoupling rubbers (6, 10) of different mechanical properties, and **in that** each of said two layers of decoupling rubber (6, 10) is in contact with the cords of said two superposed reinforcement plies (3, 4).

2. A tyre comprising a crown (20, 30), two sidewalls and two beads, a carcass reinforcement anchored in the two beads and a belt reinforcement, said carcass reinforcement comprising at least one reinforcement ply (24) formed of parallel cords forming with the circumferential direction an angle substantially equal to 90°, said belt reinforcement comprising at least one reinforcement ply (23) formed of parallel cords forming angles α of between 10° and 70° with the circumferential direction, **characterised in that**, between said crown reinforcement ply (23) and said carcass reinforcement ply (24) there are, arranged axially adjacently, at least two layers of decoupling rubbers (25, 26) of different mechanical properties, and **in that** each of said two layers of decoupling rubber (25, 26) is in contact with the cords of said two superposed reinforcement plies (23, 24).

3. A tyre according to Claim 2, in which the belt reinforcement is formed of a reinforcement ply (23) formed of parallel cords forming with the circumferential direction an angle α of between 10° and 70° and of a reinforcement ply (31) formed of parallel cords oriented substantially circumferentially.

4. A tyre according to one of Claims 1 to 3, in which each layer of decoupling rubber (6, 10, 25, 26) is produced by helical winding of a profiled element of rubber mix directly on the cords of the radially inner reinforcement ply.

5. A tyre according to one of Claims 1 to 4, in which a first decoupling layer (6, 25) is arranged between the central part of said two superposed reinforcement plies, and in which a second decoupling layer (10, 26) is arranged on at least one side of the first layer and extends at least as far as the corresponding lateral ends of said two superposed reinforcement plies.

6. A tyre according to Claim 5, in which the ratio between the elasticity moduli of the second layer (10, 26) and of the first layer (6, 25) of decoupling rubbers is of between 0.05 and 0.8.

7. A tyre according to Claim 5, in which the ratio between the elasticity moduli of the second layer (10, 26) and of the first layer (6, 25) of decoupling rubbers is of between 0.5 and 0.7.

8. A tyre according to one of Claims 5 to 7, in which the second layer (10, 26) of decoupling rubber has a value of damping factor tan δ less than that of the first layer.

9. A tyre according to Claim 8, in which the second layer (10, 26) of decoupling rubber has a value of damping factor tan δ less than 0.08.

10. A tyre according to one of Claims 5 to 9, in which the belt reinforcement comprises, on the same side as said second layer of decoupling rubber, a additional reinforcement ply (11, 32) formed of cords oriented in the circumferential direction and extending axially substantially like said second layer (10, 26) of decoupling rubber.

11. A tyre according to Claim 10, in which said additional reinforcement ply (11) is arranged radially externally relative to the two superposed reinforcement plies.

12. A tyre according to Claim 10, in which said additional reinforcement ply (11) is arranged radially internally relative to the two superposed reinforcement plies.

13. A tyre according to Claim 10, in which said additional reinforcement ply (11) is arranged radially between said two superposed reinforcement plies.

14. A tyre according to one of Claims 5 to 13, in which the aspect ratio H/B is greater than 0.55.

15. A tyre according to Claim 5, in which the ratio between the elasticity moduli of the second layer (10, 26) and of the first layer (6, 25) of decoupling rubbers is of between 1.2 and 20.

16. A tyre according to Claim 5, in which the ratio between the elasticity moduli of the second layer (10, 26) and of the first layer (6, 25) of decoupling rubbers is of between 1.5 and 10.

17. A tyre according to one of Claims 15 and 16, in which the first layer of decoupling rubber (6, 25) has a value of damping factor tan δ less than that of the second layer.

18. A tyre according to Claim 17, in which the first layer of decoupling rubber (6, 25) has a value of damping factor tan δ less than 0.08.

19. A tyre according to one of Claims 15 to 18, in which the aspect ratio H/B is less than 0.55.

20. A tyre according to one of Claims 5 to 19, in which the contact zone between the cords of the crown reinforcement ply the axial width of which is the smallest and the second layer (10, 26) of decoupling rubber is axially greater than 5 mm.

21. A tyre according to one of Claims 5 to 20, in which the contact zone between the cords of the crown reinforcement ply the axial width of which is the smallest and the second layer (10, 26) of decoupling rubber is axially between 20 mm and 1/3 of the axial width of said crown reinforcement ply.

22. A tyre according to one of Claims 5 to 21, in which said second layers (10, 26) extend axially by more than 3 mm beyond the lateral ends of the cords of said crown reinforcement plies.

## Patentansprüche

1. Reifen mit einem Scheitel (1), mit zwei Flanken und mit zwei Wülsten, mit einer Karkassenbewehrung, die in den beiden Wülsten verankert ist, und mit einer Gürtelbewehrung, wobei die genannte Gürtelbewehrung mindestens zwei übereinanderliegende Verstärkungslagen (3, 4) aufweist, die aus Drähten gebildet sind, die in jeder Lage parallel und von einer Lage zur anderen unter Bildung von Winkeln (α, β) zur Umfangsrichtung, die zwischen 10° und 70° liegen, überkreuz verlaufen, **dadurch gekennzeichnet, daß** sich zwischen den beiden übereinanderliegenden Verstärkungslagen (3, 4) axial benachbart angeordnet mindestens zwei Schichten aus Entkoppelungsgummi (6, 10) mit unterschiedlichen mechanischen Eigenschaften befinden, und daß jede der genannten, beiden Schichten aus Entkoppelungsgummi (6, 10) in Berührung mit den Drähten der genannten beiden übereinanderliegenden Verstärkungslagen (3, 4) stehen.

2. Reifen mit einen Scheitel (20, 30), mit zwei Flanken und mit zwei Wülsten, mit einer Karkassenbewehrung, die in den beiden Wülsten verankert ist, und mit einer Gürtelbewehrung, wobei die genannte Karkassenbewehrung mindestens eine Verstärkungslage (24) aufweist, die aus parallelen Drähten gebildet ist, die zur Umfangsrichtung einen Winkel bilden, der im wesentlichen 90° beträgt, und wobei die genannte Gürtelbewehrung mindestens eine Verstärkungslage (23) aufweist, die aus parallelen Drähten gebildet ist, die zur Umfangsrichtung Winkel α bilden, die zwischen 10° und 70° liegen, **dadurch gekennzeichnet, daß** sich zwischen der genannten Scheitel-Verstärkungslage (23) und der genannten Karkassen-Verstärkungslage (24) axial benachbart angeordnet mindestens zwei Schichten aus Enkoppelungsgummi (25, 26) mit unterschiedlichen mechanischen Eigenschaften befinden, und daß jede der genannten, beiden Schichten aus Entkoppelungsgummi (25, 26) in Berührung mit den Drähten der genannten beiden übereinanderliegenden Verstärkungslagen (23, 24) stehen.

3. Reifen nach Anspruch 2, worin die Gürtelbewehrung aus einer Verstärkungslage (23), die aus parallelen Drähten gebildet ist, die zur Umfangsrichtung einen Winkel α bilden, der zwischen 10° und 70° beträgt, und aus einer Verstärkungslage (31) gebildet ist, die aus parallelen Drähten gebildet ist, die im wesentlichen in Umfangsrichtung ausgerichtet sind.

4. Reifen nach einem der Ansprüche 1 bis 3, worin jede Schicht aus Entkoppelungsgummi (6, 10, 25, 26) aus einem wendelförmigen Wickel aus einem Profil aus gummihaltiger bzw. gummiartiger Mischung unmittelbar auf den Drähten der radial inneren Verstärkungslage hergestellt ist.

5. Reifen nach einem der Ansprüche 1 bis 4, worin eine erste Entkoppelungsschicht (6, 25) zwischen dem mittigen Teil der genannten beiden übereinanderliegenden Verstärkungslagen angeordnet ist, und worin eine zweite Entkoppelungsschicht (10, 26) mindestens auf der einen Seite der ersten Schicht angeordnet ist und sich mindestens bis zu den entsprechenden seitlichen Enden der genannten beiden übereinanderliegenden Verstärkungslagen erstreckt.

6. Reifen nach Anspruch 5, worin das Verhältnis zwischen den Elastizitätsmodulen der zweiten Schicht (10, 26) und der ersten Schicht (6, 25) aus Entkoppelungsgummi zwischen 0,05 und 0,8 liegt.

7. Reifen nach Anspruch 5, worin das Verhältnis zwischen den Elastizitätsmodulen der zweiten Schicht (10, 26) und der ersten Schicht (6, 25) aus Entkoppelungsgummi zwischen 0,5 und 0,7 liegt.

8. Reifen nach einem der Ansprüche 5 bis 7, worin die zweite Schicht (10, 26) aus Entkoppelungsgummi einen Wert des Dämpfungsfaktors tg δ hat, der niedriger ist als der der ersten Schicht.

9. Reifen nach Anspruch 8, worin die zweite Schicht (10, 26) aus Entkoppelungsgummi einen Wert des Dämpfungsfaktors tg δ hat, der niedriger ist als 0,08.

10. Reifen nach einem der Ansprüche 5 bis 9, worin die Gürtelbewehrung auf der selben Seite wie die genannte zweite Schicht aus Entkoppelungsgummi eine zusätzliche Verstärkungslage (11, 32) aufweist, die aus Drähten gebildet ist, die in Umfangsrichtung ausgerichtet sind, und sich axial im wesentlichen wie die genannte zweite Schicht (10, 26) aus Entkoppelungsgummi erstreckt.

11. Reifen nach Anspruch 10, worin die genannte zusätzliche Verstärkungslage (11) in Bezug auf die beiden übereinanderliegenden Verstärkungslagen radial außerhalb angeordnet ist.

12. Reifen nach Anspruch 10, worin die genannte zusätzliche Verstärkungslage (11) in Bezug auf die beiden übereinanderliegenden Verstärkungslagen radial innerhalb angeordnet ist.

13. Reifen nach Anspruch 10, worin die genannte zusätzliche Verstärkungslage (11) radial zwischen den beiden übereinanderliegenden Verstärkungslagen angeordnet ist.

14. Reifen nach einem der Ansprüche 5 bis 13, worin das Aspektverhältnis H/B größer ist als 0,55.

15. Reifen nach Anspruch 5, worin das Verhältnis zwischen den Elastizitätsmodulen der zweiten Schicht (10, 26) und der ersten Schicht (6, 25) aus Entkoppelungsgummi zwischen 1,2 und 20 liegt.

16. Reifen nach Anspruch 5, worin das Verhältnis zwischen den Elastizitätsmodulen der zweiten Schicht (10, 26) und der ersten Schicht (6, 25) aus Entkoppelungsgummi zwischen 1,5 und 10 liegt.

17. Reifen nach einem der Ansprüche 15 und 16, worin die erste Schicht (6, 25) aus Entkoppelungsgummi einen Wert des Dämpfungsfaktors tg δ hat, der niedriger ist als der der zweiten Schicht.

18. Reifen nach Anspruch 17, worin die erste Schicht (6, 25) aus Entkoppelungsgummi einen Wert des Dämpfungsfaktors tg δ hat, der niedriger ist als 0,08.

19. Reifen nach einem der Ansprüche 15 bis 18, worin das Aspektverhältnis H/B größer ist als 0,55.

20. Reifen nach einem der Ansprüche 5 bis 19, worin die Zone der Berührung zwischen den Drähten der Scheitel-Verstärkungslage, deren axiale Breite die kleinste ist, und der zweiten Schicht (10, 26) aus Entkoppelungsgummi axial größer ist als 5 mm.

21. Reifen nach einem der Ansprüche 5 bis 20, worin die Zone der Berührung zwischen den Drähten der Scheitel-Verstärkungslage, deren axiale Breite die kleinste ist, und der zweiten Schicht (10, 26) aus Entkoppelungsgummi axial zwischen 20 mm und 1/3 der axialen Breite der genannten Scheitel-Verstärkungslage beträgt.

22. Reifen nach einem der Ansprüche 5 bis 21, worin sich die genannten zweiten Schichten (10, 26) axial höchstens um 3 mm über die seitlichen Enden der Drähte der genannten Scheitel-Verstärkungslagen hinaus erstrecken.
